# EUROPÄISCHE PATENTSCHRIFT

(11) **EP 2 574 235 B1**
(45) Veröffentlichungstag und Bekanntmachung des Hinweises auf die Patenterteilung: **10.09.2014**
(21) Anmeldenummer: 12401193.3
(22) Anmeldetag: 24.09.2012
(51) Int. Cl.: A01M 7/00

(54) **Landwirtschaftliche Verteilmaschine**
Agricultural distributor
Machine de répartition agricole

(30) Priorität: 28.09.2011 DE 102011054019
(43) Veröffentlichungstag der Anmeldung: 03.04.2013
(73) Patentinhaber: Amazonen-Werke H. Dreyer GmbH & Co. KG, 49205 Hasbergen (DE)
(72) Erfinder: Fröschle, Heike, 73760 Ostfildern (DE); Kiefer, Stefan, 49074 Osnabrück (DE); Rahe, Florian, 49504 Lotte (DE)

(56) Entgegenhaltungen:
- EP-A1- 1 961 299
- EP-A1- 2 243 353
- WO-A2-2011/041617

## Beschreibung

Die Erfindung betrifft eine landwirtschaftliche Verteilmaschine, insbesondere Feldspritze, gemäß des Oberbegriffes des Anspruches 1.

Beim Spritzen (Ausbringen von flüssigen Pflanzenschutzmitteln mit einer Feldspritze) auf landwirtschaftlichen Flächen gibt es je nach Wirkstoff genaue Vorgaben für das Mischungsverhältnis zwischen Wirkstoff und Wasser. Weiterhin ist auch die ausgebrachte Menge an Spritzmittel pro Fläche von besonderer Bedeutung. Bei diesen Vorgaben muss auch die auf den Blättern vorhandene Menge an Wasser berücksichtigt werden. Ist die Gesamtmenge an Wasser zu groß besteht die Gefahr, dass zu viel Flüssigkeit auf die Blätter der Pflanzen kommt und dann die Flüssigkeit (so auch Wirkstoff) von der Pflanze herunterfließt. Auch wenn der aufgebrachte Wirkstoff ggf. nicht herunterfließt, wird die Spritzbrühe durch das vorhandene Wasser verdünnt, so dass ggf. die Wirksamkeit der Maßnahme deutlich reduziert wird. Die Grenzwerte unter denen das entsprechend passieren wird, hängen zusätzlich noch von der Kulturart, der Applikation (Wirkstoff, Düse usw.) und dem Wachstumsstadium der Pflanzen ab.

Da bei zu niedriger Luftfeuchtigkeit, starker Hitze oder Sonnenschein Spritzmaßnahmen kaum durchzuführen sind, muss damit auf die Abendstunden, Nacht oder die Morgenstunden ausgewichen werden. Genau zu diesen Zeitpunkten ist mit Tau zu rechnen. Somit ist für den Landwirt kaum zu entscheiden, zu welchem Zeitpunkt er eine Pflanzenschutzmaßnahme am sinnvollsten durchführen kann und soll.

In der 1 961 299 B1 wird ein Tausensor beschrieben, der am Schlepper oder an der Spritze montiert die Taumenge misst. Es ist auch schwierig, die Feuchtigkeit in den Pflanzen von der Menge an Wasser oder Tau auf den Pflanzen zu unterscheiden. Ein weiteres Problem bei der Taubildung ist, dass dies ein langsamer aber dynamischer Prozess ist. Somit kann zu Beginn einer Spritzmaßnahme gar kein oder wenig Tau auf den Pflanzen sein. Zum Ende der Maßnahme kann sich die Taumenge aber deutlich vergrößert haben. Wichtig ist an dieser Stelle dass die Summe an Spritzbrühe und Tau bestimmte Grenzen nicht überschreiten darf. Somit müsste beim Spritzen berücksichtigt werden wie viel Tau sich in den auf die Maßnahme folgenden Stunden bilden wird.

Der Erfindung liegt die Aufgabe zugrunde, dem Anwender Informationen zur Verfügung zu stellen, um günstige und/oder optimale Zeitfenster für das Ausbringen der Spritzflüssigkeit zu ermitteln.

Diese Aufgabe wird erfindungsgemäß dadurch gelöst, dass der Computer mit einem elektronischen Rechensystem zur Ermittlung des Feuchtebedeckungsgrades von Pflanzen auf der zu bearbeitenden landwirtschaftlichen Flächen mittels eines in dem Speicher eines Computers hinterlegten Programmes mit einem Prognosetool unter Berücksichtigung vergangener und/oder aktueller und/oder vorhergesagter und/oder zu erwartenden Wetterdaten zusammenarbeitet, wobei mittels des Programmes aus diesen und/oder einer Auswahl aus diesen Wetterdaten eine Voraussage über den zu erwartenden Taubedeckungsgrad pro Zeitpunkt auf den zu bearbeitenden landwirtschaftlichen Flächen errechnet und das errechnete Ergebnis in die Berechnung der Daten zur Einstellung der Ausbringmenge und/oder der Konzentration der auszubringenden Pflanzenschutzflüssigkeit durch das Programm eingeht und/oder in geeigneter Weise auf einem Ausgabemedium ausgeben wird. Infolge dieser Maßnahmen können mithilfe des Programmes und der Wetterdaten hochwertige Voraussagen getroffen werden, zu welchen Zeitpunkten optimale Ausbringbedingungen zum Ausbringen der Pflanzenschutzflüssigkeiten bestehen. Weiterhin wird aufgrund der Vorhersagedaten die Ausbringungsmenge und/oder die Konzentration der auszubringenden Pflanzenschutzflüssigkeit berechnet, so dass sofort zu Beginn des Ausbringens der Pflanzenschutzflüssigkeit, bevor der Sensor über den Feuchtebedeckungsgrad Daten liefert, Einstelldaten für die Ausbringungsmenge und die Konzentration der auszubringenden Pflanzenschutzflüssigkeit zur Verfügung stehen.

Eine Qualitätssteigerung der Daten, nach denen die Ausbringungsmenge und/oder an die Konzentration der auszubringenden Pflanzenflüssigkeit eingestellt wird, lässt sich dadurch erreichen, dass das Rechnersystem die von der Sensoreinrichtung ermittelten Daten und den daraus berechneten Feuchtebedeckungsgrad mit dem durch das Programm aufgrund von Wetterdaten ermittelten Feuchtebedeckungsgrad vergleicht und aufgrund eines in dem Speicher des Computers hinterlegten Entscheidungsprogrammes entscheidet nach welchen Daten die auszubringende Menge der Pflanzenschutzflüssigkeit und/oder die Konzentration der Pflanzenschutzflüssigkeit bestimmt und/oder eingestellt wird.

Hat der Landwirt und/oder Anwender seine Maßnahme geplant, fährt er mit der entsprechend vorbereiteten Spritze auf das zu behandelnde Feld. Da ist es für den Landwirt und/oder Anwender insbesondere dann von Vorteil, wenn die Spritze die Konzentration der Spritzbrühe erst beim Ausbringen einstellt. Vor Ort verbessert das System die Vorhersage anhand aktuellerer Daten.

Durch den am Schlepper und/oder an der Spritze befestigten Sensor, der aktuelle Messdaten (Luftfeuchtigkeit, Temperatur, Blatttemperatur, Oberflächentemperatur der Kulturart, oder auch Taumenge) während der Fahrt misst, gleicht ein im Speicher eines Rechners, der auf dem Schlepper angeordnet ist, hinterlegten Programmes diese Daten mit der Tauvorhersage, den gespeicherten Daten aus dem Internet und/oder von der Datenbank und/oder den überregionalen und/oder lokalen Wetterstationen ab. Anhand dieses Abgleichs wird eine Tauvorhersage für die aktuelle Position der Spritze gemacht. Anhand dieser Tauvorhersage werden die notwendige Wasseraufwandmenge und/oder die Spritzbrühenkonzentration und/oder Mittelaufwandmenge bestimmt, mit der die Spritzflüssigkeit optimal auszubringen ist. Anhand dieser vorgeschlagenen Menge wird nun teilflächenspezifisch die ausgebrachte Wassermenge und/oder Spritzbrühenkonzentration und/oder Mittelaufwandmenge an der Spritze geregelt. Zeigt sich anhand der Daten, dass die zu erwartende Menge an Tau zu groß sein wird, wird dem Landwirt und/oder Anwender eine Warnmeldung ausgegeben werden, damit er entscheiden kann, ob er die Maßnahme weiterführen oder abbrechen möchte.

Um zu hochwertigen Voraussagen über den Taubedeckungsgrad zu kommen, ist vorgesehen, dass das System auf in zumindest einer Datenbank abgespeicherter lokaler, regionaler, überregionaler und/oder globaler Wetterdaten zugreift und bei der Berechnung des jeweiligen Taubedeckungsgrades berücksichtigt.

Um sehr genaue Aussagen für die zu behandelnde Fläche treffen zu können, ist in einer Ausführungsform vorgesehen, dass auf dem zu bearbeitenden landwirtschaftlichen Flächen lokale Wetterstationen, die die lokalen Wetterdaten liefern, vorhanden sind.

Um eine weitere Verbesserung der Voraussagequalität für den optimalen Zeitpunkt für die Ausbringung der Pflanzenschutzflüssigkeit zu erreichen, ist vorgesehen, dass das System bei der Berechnung des jeweiligen Taubedeckungsgrades zusätzlich die Blatttemperatur der Pflanzen und/oder die Oberflächentemperatur des Pflanzenbestandes auf der zu bearbeitenden landwirtschaftlichen Fläche berücksichtigt.

Um dem Anwender und/oder Landwirt die errechneten Daten in einfacher Weise mitteilen zu können, ist vorgesehen, dass die tatsächliche und/oder zu erwartende Taumenge zu den vorgesehenen Behandlungszeitpunkten auf dem Ausgabemedium ausgegeben und/oder in einem geeigneten Speichermedium abgespeichert wird.

Um die optimale Spritzmittelkonzentration für die jeweils vorherrschende Taumenge, die auf die Blätter der Pflanze bei der Durchführung der Pflanzenschutzmaßnahme sein wird, berechnen zu können, ist vorgesehen, dass mittels des Programmes aufgrund hinterlegter Daten über das auszubringende Spritzmittel in Verbindung mit dem berechneten Taubedeckungsgrad die Konzentration der auszubringenden Spritzbrühe berechnet wird und auf dem Ausgabemedium ausgebbar ist.

Weiterhin ist vorgesehen, dass aufgrund des durch das System berechneten Taubedeckungsgrades auf dem Ausgabemedium ausgebbar ist, ob er die geplante Pflanzenschutzmaßnahme durchführbar ist.

Um vor Ort dem Anwender die Daten über die Vorhersage des Taubedeckungsgrades in einfacher Weise mitteilen zu können, ist vorgesehen, dass das Ausgabemedium auf dem Pflanzenschutzgerät angeordnet ist.

Weiterhin ist vorgesehen, dass mittels des auf dem Pflanzenschutzgerät angeordneten Ausgabemediums die während des Ausbringensvorganges von dem Rechnersystem errechneten und/oder ausgegebenen Daten unter Berücksichtigung der in dem Rechnersystemen enthaltenen Toleranzgrenzen angezeigt wird, ob die Konzentration der Spritzbrühe von der optimalen Konzentration abweicht und/oder die Taumenge für die Pflanzenschutzmaßnahme zu groß ist, und dass bei Überschreiten der Toleranzgrenzen ein Hinweis auf dem Ausgabemedium ausgegeben wird. Hierdurch wird dem Anwender mitgeteilt, wann die optimalen Verhältnisse für das Ausbringen der Pflanzenschutzflüssigkeit nicht mehr gegeben sind.

Zusammengefasst besteht das Entscheidungs-Unterstützungssystem zum Spritzen aus einem Rechner, Smartphone oder Bedienterminal mit Microcontroller, dem aktuelle und oder historische lokale Wetterdaten (z.B. Temperatur, Luftdruck, Luftfeuchtigkeit, Hoch-/ Tiefdruckwetterlagen, Wetterumschwünge, Niederschlag) zur Verfügung stehen, bzw. diese gespeichert hat. Diese Daten können aus dem Internet und/oder einer Datenbank und/oder von einer lokalen und/oder überregionalen Wetterstation stammen. Dabei können die Daten der Wetterstation im Internet oder in der Datenbank gespeichert werden. Der Landwirt kann für verschiedene Flächen die Kulturart und das Wachstumsstadium der Pflanzen eingeben. Anhand der gespeicherten, eingegebenen und aktuell ermittelten Daten berechnet der Rechner die Wahrscheinlichkeit, ob eine Taubildung in der nächsten Zeit stattfinden wird. Zudem schätzt der Rechner ggf. den Zeitraum der Taubildung und eine mögliche Taumenge ab. Diese Abschätzung kann auf verschiedene Weise geschehen. Es kann zum einen ein vorher ermitteltes Modell zur Tauabschätzung verwendet werden. Eine weitere Möglichkeit ist die in den vorherigen Tagen aufgezeichnete Daten zu verwenden. Hierbei werden die aktuellen Daten mit älteren Daten verglichen. Anhand der Wetterdaten oder Taumengen der vorherigen Tage kann die zu erwartende Taumenge und der Zeitraum der Taubildung für die nächste Zeit gut abgeschätzt und vorhergesagt werden. Damit kann der Landwirt entscheiden ob und wenn in welchem Zeitraum er eine Pflanzenschutzmaßnahme am sinnvollsten durchführen kann. Bei genaueren Daten kann der Rechner auch eine Empfehlung für die Maßnahme geben. Sind zusätzlich Informationen vom Spritzmittelhersteller vorhanden, kann bei Taubildung auch ein Vorschlag für ein anderes Mischungsverhältnis der Spritzbrühe gemacht werden, wobei die Menge an Wasser auf den Pflanzen (Tau) berücksichtigt wird. Damit ist der Landwirt in der Lage seine Maßnahme auch bei Taubedingungen durchzuführen, ohne eine Reduktion der Wirksamkeit der Maßnahme zu befürchten. In einer verbesserten Ausführung ist eine überregionale und/oder lokale Wetterstation mit dem Rechner verbunden. Anhand der aufgezeichneten und/oder aktuellen Wetterdaten kann die Anzeige der Ergebnisse verbessert werden. Noch genauere Aussagen kann der Rechner machen, wenn er mit einem Wetter-Sensor auf dem Feld drahtgebunden oder per Funk verbunden ist. Dabei können diese Daten auch fortlaufend im Internet oder einer Datenbank gespeichert werden. Dieser Sensor misst zum Beispiel Temperatur, Luftfeuchtigkeit, Blatttemperatur und/oder Oberflächentemperatur der Kulturart im Feld. Dabei ist die Blatttemperatur oder Oberflächentemperatur der Kulturart von besonderer Bedeutung.

Diese Daten können zum einen zum Zeitpunkt der Planung der Maßnahme und/oder kurz vor der Durchführung und/oder während der Maßnahme ausgelesen werden. Es können auch zusätzlich gespeicherte Daten aus der Vergangenheit verwendet werden. Mit diesen überregionalen und/oder lokalen Daten kann dann die Vorhersage für den Landwirt verbessert werden.
Es können auch aktuelle Daten während des Spritzens an den Schlepper übermittelt werden, so dass der Landwirt über die aktuelle Tauentwicklung informiert ist. Weicht das Mischungsverhältnis der Spritzbrühe in seiner Spritze zu stark von der neu vorhergesagten Taumenge und dadurch optimalen Konzentration ab, so kann ihm eine Warnung angezeigt werden. Bei zu viel zu erwartendem Tau könnte dem Landwirt auch eine Warnung angezeigt werden, dass die Maßnahme nicht mehr sicher durchzuführen ist.

Zusammengefasst arbeitet das erfindungsgemäße nach folgenden Überlegungen:
Das Vorhersagesystem hat die Aufgabe eine einfache und sachgerechte Anwendung des Systems zur Ermittlung des Taubedeckungsgrades zu gewährleisten und das System eines Sensorsystems zu direkten Messung des Taubedeckungsgrades durch ein einen während der Ausbringung des Pflanzenschutzmittels durch zusätzlich zur Verfügung gestellte Information zu ergänzen.

Die Bestimmung des Vorhersagesystems ist es, anhand regional zur Verfügung stehender Wetterdaten (Online Wettervorsage) und aus den Wetterdaten der vorhergegangenen Tage, eine Aussage zu treffen, ob das Systems mit der Berücksichtigung des Taubedeckungsgrades zum Einsatz kommen kann, da eine dementsprechende Wetterlage vorliegen wird. Das System berechnet hierzu aus den Wetterdaten, anhand der MAGNUS Formel (bzw. deren Umformung) die Taupunkttemperatur, berücksichtigt den Luftdruck, Hoch- oder Tiefdruckwetterlagen sowie Wetterumschwünge und setzt dies zu einer Empfehlung für oder gegen eine Nutzung des Systems zur Berücksichtigung des Taubedeckungsgrades um. Zusätzlich werden in dieser Empfehlung die Grenzen der möglichen Ausbringung bei einer Bestimmten Taumenge für die jeweils behandelte Kultur berücksichtigt. Werden diese Grenzwerte über- oder unterschritten (d.h. es gibt zu viel oder zu wenig Tau), wird die Empfehlung, in Abhängigkeit von der behandelten Kultur und deren Entwicklungsstadium und des zum Einsatz kommenden Wirkstoffes, korrigiert. Zudem gibt das System den Beginn und das Ende des Taubildungszeitraumes in der betreffenden Nacht bekannt. Ermittelt wird dies durch die vom System "Sensorstation" anhand von Klimasensoren erfassten Werte bzgl. Temperatur, Feuchte und Blattoberflächentemperatur sowie durch die Berechnung und den Abgleich der Taupunkttemperatur und Lufttemperaturkurve des heutigen und der vergangenen Tage.

Die Sensorstation ist ein, dem Systems zur Berücksichtigung des Taubedeckungsgrades vorgeschaltetes, mit dem Entscheidungssystem verknüpftes System, bestehend aus einer lokalen/oder überregionalen Messstation/en mit verschiedenen (Klima-)Sensoren (Temperatur, Feuchte, Infrarotsensor für Messung der Oberflächentemperatur der Blätter) und einer direkt verknüpften, zentralen Datenbank. Diese Datenbank ist der Verbindungspunkt zum System Tausensor, in und aus der beider Systeme Daten entnehmen bzw. einspeisen und zu Dokumentationszwecken auch speichern können, um dem Landwirt bestimmte Informationen verfügbar zu machen (Behandlungshistorie, Wasserverbrauch der Nacht, Tauverläufe, alle möglichen Wetterdaten der Nacht o.ä.).

Die Sensorstation liefert, sowohl für das DSS als auch für das System Tausensor, grundlegende lokale Basisdaten. Basierend auf diesen Daten kann das System zur Berücksichtigung des Taubedeckungsgrades, anhand der Verlaufshistorie, ohne "Anlaufzeit" sofort eingesetzt werden, da die Werte der Sensorstation zunächst als Ausgangswerte dienen und dann durch die vom System Tausensor auf der Maschine während der Fahrt aufgenommenen Daten korrigiert werden. Ohne die Daten der Sensorstation ist der Einsatz des Systems Tausensor nicht möglich, da die Verlaufshistorie aufgrund der Komplexität des Taubildungsprozesses einer der wichtigsten Faktoren ist, da Tau kein konstanter physikalischer Wert ist.

Ebenfalls aufgrund der Verlaufshistorie von Taubildung, - beginn und -ende, stellt die Sensorstation die Berechnungsbasis für die Prognose des Systems zur Berücksichtigung des Taubedeckungsgrades zur Verfügung.

In beiden Fällen werden die Daten der Sensorstation an die zentrale Datenbank weitergeleitet und dort gespeichert. Die Systeme DSS und Tausensor greifen dann auf diese zu und führen die jeweils gewünschten Berechnungen (Taumenge, Angleichung der Oberflächentemperatur beim Tausensor zur Wasserregelung, Prognose und Tauzeitraum beim DSS) im jeweiligen System separat aus. Beide Systeme können die zentrale Datenbank ebenfalls zur Speicherung/Sicherung von Daten oder zu Dokumentationszwecken nutzen. Dadurch können dem Landwirt ebenfalls weitere Informationen über die Applikation, die verbrauchte Wassermenge usw. zur Verfügung gestellt werden. Vorstellbar wäre auch zu selbigem Zweck, weitere Daten von "außerhalb" der drei Systeme mit in die Datenbank aufzunehmen.

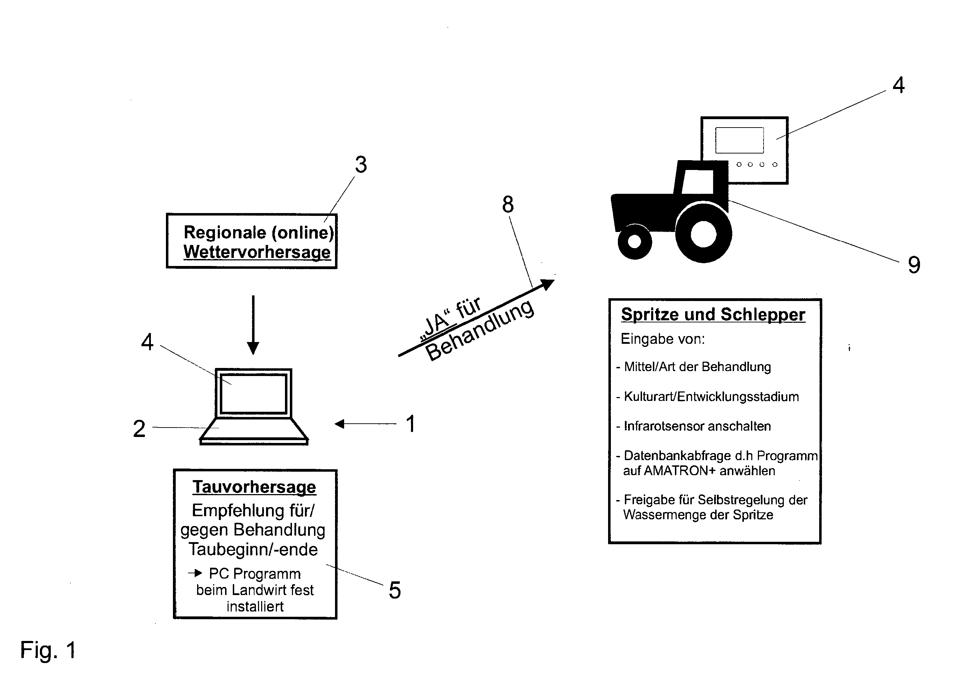

Weitere Einzelheiten der Erfindung sind der Bespielsbeschreibung zu entnehmen. Die Zeichnungen zeigen
- Fig.1: in Prinzipdarstellung das Vorhersagesystem,

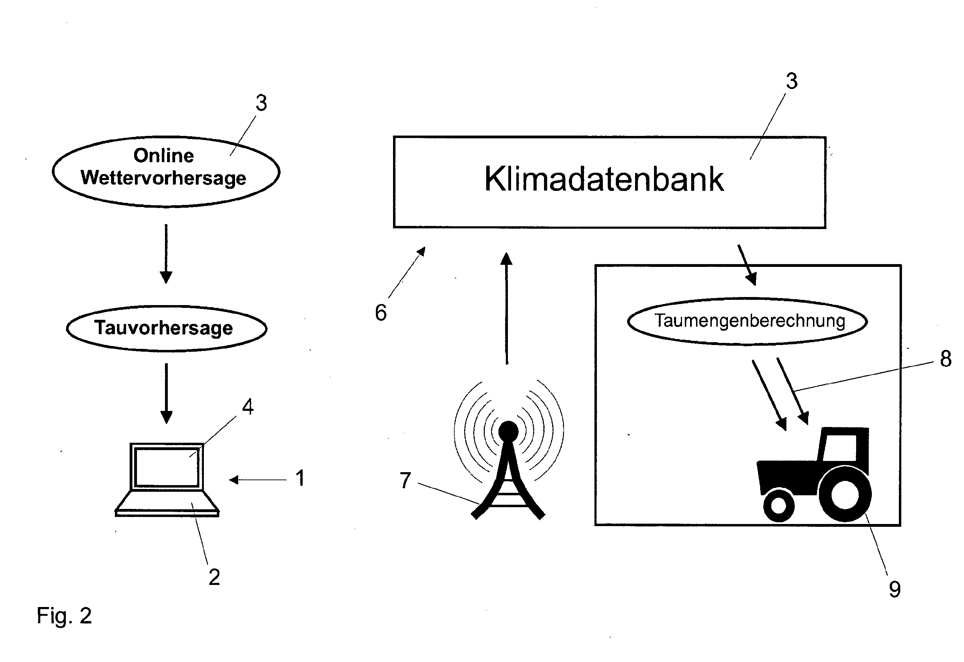

- Fig2.: Das Schema der Vorhersage Ermittlung und Weiterleitung der Entscheidung an den Anwender und
- Fig.3: das Regelschema bei Ermittlung und Berücksichtigung des Taubedeckungsgrades.

Das elektronische Rechensystem 1 dient zur Ermittlung des Feuchtebedeckungsgrades von Pflanzen auf zu bearbeitenden landwirtschaftlichen Flächen mittels eines in dem Speicher eines Computers 2 hinterlegten Programmes mit einem Prognosetool unter Berücksichtigung vergangener und/oder aktueller und/oder vorhergesagter und/oder zu erwartenden Wetterdaten 3. Mittels des Programmes wird aus diesen und/oder einer Auswahl aus diesen Wetterdaten 3 eine Voraussage über den zu erwartenden Taubedeckungsgrad pro Zeitpunkt auf den zu bearbeitenden landwirtschaftlichen Flächen errechnet und das errechnete Ergebnis auf einem Ausgabemedium 4 ausgeben wird, wie bei 5 gezeigt ist.

Das System 1 greift auf in zumindest einer Datenbank 6 abgespeicherter lokaler, regionaler, überregionaler und/oder globaler Wetterdaten 3 zu und berücksichtigt diese bei der Berechnung des jeweiligen Taubedeckungsgrades. Auf dem zu bearbeitenden landwirtschaftlichen Flächen können lokale Wetterstationen 7, die die lokalen Wetterdaten liefern, vorhanden sein.

Das System berücksichtigt bei der Berechnung des jeweiligen Taubedeckungsgrades zusätzlich die Blatttemperatur der Pflanzen und/oder die Oberflächentemperatur des Pflanzenbestandes auf der zu bearbeitenden landwirtschaftlichen Fläche. Die tatsächliche und/oder zu erwartende Taumenge zu den vorgesehenen Behandlungszeitpunkten auf dem Ausgabemedium 4, beispielsweise einem Bildschirm oder Display ausgegeben und/oder in einem geeigneten Speichermedium abgespeichert wird.

Mittels des Programmes wird aufgrund hinterlegter Daten über das auszubringende Spritzmittel in Verbindung mit dem berechneten Taubedeckungsgrad die Konzentration der auszubringenden Spritzbrühe berechnet und auf dem Ausgabemedium 4 ausgegeben.

Aufgrund des durch das System berechneten Taubedeckungsgrades ist dieser auf dem Ausgabemedium 4 auszugeben, ob er die geplante Pflanzenschutzmaßnahme durchführbar, wie durch den Entscheidungspfeil 8 angedeutet ist.

Das Ausgabemedium 4 ist auf dem Pflanzenschutzgerät oder dem das Pflanzenschutzgerät ziehenden oder tragenden Ackerschlepper 9 angeordnet.

Mittels des auf dem Pflanzenschutzgerät oder dem das Pflanzenschutzgerät ziehenden oder tragenden Ackerschlepper 9 angeordneten Ausgabemediums 4 wird die während des Ausbringvorganges von dem Rechnersystem errechneten und/oder ausgegebenen Daten unter Berücksichtigung der in dem Rechnersystemen enthaltenen Toleranzgrenzen angezeigt, ob die Konzentration der Spritzbrühe von der optimalen Konzentration abweicht und/oder die Taumenge für die Pflanzenschutzmaßnahme zu groß ist. Bei Überschreiten der Toleranzgrenzen wird ein Hinweis auf dem Ausgabemedium 4 ausgegeben.

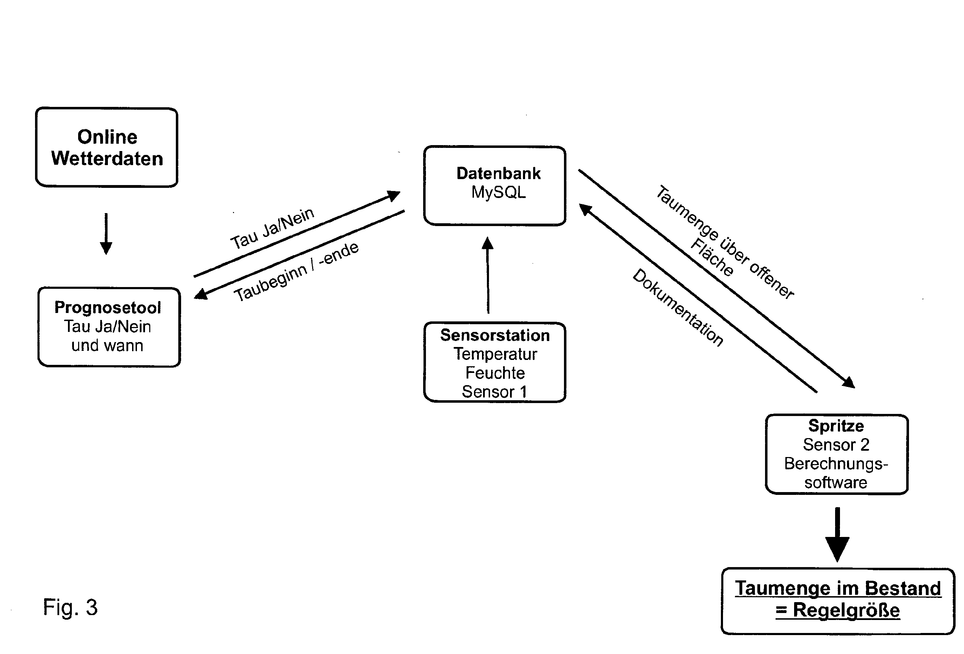

Hat der Landwirt und/oder Anwender seine Maßnahme geplant, fährt er mit der entsprechend vorbereiteten Spritze auf das zu behandelnde Feld. Da ist es für den Landwirt und/oder Anwender insbesondere dann von Vorteil, wenn die Spritze die Konzentration der Spritzbrühe erst beim Ausbringen einstellt. Vor Ort verbessert das System die Vorhersage anhand aktuellerer Daten, wie die Fig. 3 zeigt.

Durch den am Schlepper und/oder an der Spritze befestigten Sensor, der aktuelle Messdaten (Luftfeuchtigkeit, Temperatur, Blatttemperatur, Oberflächentemperatur der Kulturart, oder auch Taumenge) während der Fahrt misst, gleicht ein im Speicher eines Rechners, der auf dem Schlepper angeordnet ist, hinterlegten Programmes diese Daten mit der Tauvorhersage, den gespeicherten Daten aus dem Internet und/oder von der Datenbank und/oder den überregionalen und/oder lokalen Wetterstationen ab, wie in Fig. 3 dargestellt ist. Anhand dieses Abgleichs wird eine Tauvorhersage für die aktuelle Position der Spritze gemacht. Anhand dieser Tauvorhersage werden die notwendige Wasseraufwandmenge und/oder die Spritzbrühenkonzentration und/oder Mittelaufwandmenge bestimmt, mit der die Spritzflüssigkeit optimal auszubringen ist. Anhand dieser vorgeschlagenen Menge wird nun teilflächenspezifisch die ausgebrachte Wassermenge und/oder Spritzbrühenkonzentration und/oder Mittelaufwandmenge an der Spritze geregelt. Zeigt sich anhand der Daten, dass die zu erwartende Menge an Tau zu groß sein wird, wird dem Landwirt und/oder Anwender eine Warnmeldung ausgegeben werden, damit er entscheiden kann, ob er die Maßnahme weiterführen oder abbrechen möchte, wie in Fig. 3 dargestellt ist.

Grundsätzlich wird die Pflanzenschutzflüssigkeit nach folgendem Grundprinzip unter berücksichtigt des Tau- oder Feuchtebedeckungsgrades auf den Pflanzen mit einer Pflanzenschutzspritze ausgebracht:
Mit einer landwirtschaftlichen Verteilmaschine, insbesondere einer Feldspritze wird das auszubringende Material, insbesondere Pflanzenschutzflüssigkeit auf den Pflanzen eines Feldes ausgebracht. Mittels zumindest eines einstellbaren Dosierorganes wird die Pflanzenschutzflüssigkeit in einstellbaren Mengen und/oder einstellbaren Konzentrationen Ausbringorganen, beispielsweise Spritzdüsen, die einen Spritz- oder Sprühfächer erzeugen, zugeführt. Das zumindest ein Dosierorgan ist von einem elektronischen Rechensystem, welches einen Computer aufweist, ansteuer- und/oder einstellbar. Die Feldspritze weist eine Sensoreinrichtung (Sensor 2) zur Sammlung von Daten über den Feuchtebedeckungsgrad der Pflanzen, die Blatttemperatur und/oder die Oberflächentemperatur des Pflanzenbestandes auf einer landwirtschaftlichen Feldfläche auf. Die Sensoreinrichtung übermittelt die Daten an den Computer, wobei der Bordcomputer aufgrund der über den Feuchtebedeckungsgrad der Pflanzen übermittelten Daten anhand eines in seiner Speicher hinterlegten Programmes die Ausbringmenge und/oder Konzentration der auszubringenden Pflanzenschutzflüssigkeit ermittelt und entsprechend die Vorrichtung zur Einstellung der Ausbringmenge und/oder Konzentration der auszubringenden Pflanzenschutzflüssigkeit einstellt. Der Computer arbeitet mit einem elektronischen Rechensystem zur Ermittlung des Feuchtebedeckungsgrades von Pflanzen auf der zu bearbeitenden landwirtschaftlichen Flächen mittels eines in dem Speicher eines Computers hinterlegten Programmes mit einem Prognosetool unter Berücksichtigung vergangener und/oder aktueller und/oder vorhergesagter und/oder zu erwartenden Wetterdaten zusammen. Mittels des Programmes wird aus diesen und/oder einer Auswahl aus diesen Wetterdaten eine Voraussage über den zu erwartenden Taubedeckungsgrad pro Zeitpunkt auf den zu bearbeitenden landwirtschaftlichen Flächen errechnet und das errechnete Ergebnis in die Berechnung der Daten zur Einstellung der Ausbringmenge und/oder der Konzentration der auszubringenden Pflanzenschutzflüssigkeit durch das Programm eingeht und/oder in geeigneter Weise auf einem Ausgabemedium ausgeben.

Das Rechnersystem vergleicht die von der Sensoreinrichtung ermittelten Daten und den daraus berechneten Feuchtebedeckungsgrad mit dem durch das Programm aufgrund von Wetterdaten ermittelten Feuchtebedeckungsgrad und entscheidet aufgrund eines in dem Speicher des Computers hinterlegten Entscheidungsprogrammes nach welchen Daten die auszubringende Menge der Pflanzenschutzflüssigkeit und/oder die Konzentration der Pflanzenschutzflüssigkeit bestimmt und/oder eingestellt wird.

Zeigt sich anhand der Daten, dass die zu erwartende Menge an Tau zu groß sein wird, wird dem Landwirt und/oder Anwender eine Warnmeldung ausgegeben werden, damit er entscheiden kann, ob er die Maßnahme weiterführen oder abbrechen möchte, wie in Fig. 3 dargestellt ist.

## Patentansprüche

1. Landwirtschaftliche Verteilmaschine, insbesondere Feldspritze, wobei das auszubringende Material, insbesondere Pflanzenschutzflüssigkeit mittels zumindest eines einstellbaren Dosierorganes in einstellbaren Mengen und/oder einstellbaren Konzentrationen Ausbringorganen zugeführt wird, wobei das zumindest eine Dosierorgan von einem elektronischen Rechensystem (1), welches einen Computer (2) aufweist, ansteuer- und/oder einstellbar ist, wobei der Verteilmaschine eine Sensoreinrichtung zur Sammlung von Daten über den Feuchtebedeckungsgrad der Pflanzen, die Blatttemperatur und/oder die Oberflächentemperatur des Pflanzenbestandes auf einer landwirtschaftlichen Feldfläche zugeordnet ist, wobei die Sensoreinrichtung die Daten an den Computer (2) übermittelt, wobei der Bordcomputer (2) aufgrund der über den Feuchtebedeckungsgrad der Pflanzen übermittelten Daten anhand eines in seinem Speicher hinterlegten Programmes die Ausbringmenge und/oder Konzentration der auszubringenden Pflanzenschutzflüssigkeit ermittelt und entsprechend die Vorrichtung zur Einstellung der Ausbringmenge und/oder Konzentration der auszubringenden Pflanzenschutzflüssigkeit einstellt, **dadurch gekennzeichnet, dass** der Computer (2) mit einem elektronischen Rechensystem (1) zur Ermittlung des Feuchtebedeckungsgrades von Pflanzen auf der zu bearbeitenden landwirtschaftlichen Flächen mittels eines in dem Speicher eines Computers (2) hinterlegten Programmes mit einem Prognosetool unter Berücksichtigung vergangener und/oder aktueller und/oder vorhergesagter und/oder zu erwartenden Wetterdaten (3) zusammenarbeitet, wobei mittels des Programmes aus diesen und/oder einer Auswahl aus diesen Wetterdaten (3) eine Voraussage über den zu erwartenden Taubedeckungsgrad pro Zeitpunkt auf den zu bearbeitenden landwirtschaftlichen Flächen errechnet und das errechnete Ergebnis in die Berechnung der Daten zur Einstellung der Ausbringmenge und/oder der Konzentration der auszubringenden Pflanzenschutzflüssigkeit durch das Programm eingeht und/oder in geeigneter Weise auf einem Ausgabemedium (4) ausgeben wird.

2. Landwirtschaftliche Verteilmaschine nach Anspruch 1, **dadurch gekennzeichnet, dass** das Rechnersystem (1) die von der Sensoreinrichtung ermittelten Daten und den daraus berechneten Feuchtebedeckungsgrad mit dem durch das Programm aufgrund von Wetterdaten (3) ermittelten Feuchtebedeckungsgrad vergleicht und aufgrund eines in dem Speicher des Computers (2) hinterlegten Entscheidungsprogrammes entscheidet nach welchen Daten die auszubringende Menge der Pflanzenschutzflüssigkeit und/oder die Konzentration der Pflanzenschutzflüssigkeit bestimmt und/oder eingestellt wird.

3. Landwirtschaftliche Verteilmaschine nach Anspruch 1, **dadurch gekennzeichnet, dass** das System auf in zumindest einer Datenbank (6) abgespeicherter lokaler, regionaler, überregionaler und/oder globaler Wetterdaten (3) zugreift und bei der Berechnung des jeweiligen Taubedeckungsgrades berücksichtigt.

4. Landwirtschaftliche Verteilmaschine nach zumindest einem der vorstehenden Ansprüche, **dadurch gekennzeichnet, dass** auf dem zu bearbeitenden landwirtschaftlichen Flächen lokale Wetterstationen (7), die die lokalen Wetterdaten (3) liefern, vorhanden sind.

5. Landwirtschaftliche Verteilmaschine nach zumindest einem der vorstehenden Ansprüche, **dadurch gekennzeichnet, dass** das System bei der Berechnung des jeweiligen Taubedeckungsgrades zusätzlich die Blatttemperatur der Pflanzen und/oder die Oberflächentemperatur des Pflanzenbestandes auf der zu bearbeitenden landwirtschaftlichen Fläche berücksichtigt.

6. Landwirtschaftliche Verteilmaschine nach zumindest einem der vorstehenden Ansprüche, **dadurch gekennzeichnet, dass** die tatsächliche und/oder zu erwartende Taumenge zu den vorgesehenen Behandlungszeitpunkten auf dem Ausgabemedium (4) ausgegeben und/oder in einem geeigneten Speichermedium abgespeichert wird.

7. Landwirtschaftliche Verteilmaschine nach zumindest einem der vorstehenden Ansprüche, **dadurch gekennzeichnet, dass** mittels des Programmes aufgrund hinterlegter Daten über das auszubringende Spritzmittel in Verbindung mit dem berechneten Taubedeckungsgrad die Konzentration der auszubringenden Spritzbrühe berechnet wird und auf dem Ausgabemedium (4) ausgebbar ist.

8. Landwirtschaftliche Verteilmaschine nach zumindest einem der vorstehenden Ansprüche, **dadurch gekennzeichnet, dass** aufgrund des durch das System berechneten Taubedeckungsgrades auf dem Ausgabemedium ausgebbar ist, ob er die geplante Pflanzenschutzmaßnahme durchführbar ist.

9. Landwirtschaftliche Verteilmaschine nach zumindest einem der vorstehenden Ansprüche, **dadurch gekennzeichnet, dass** das Ausgabemedium (4) auf dem Pflanzenschutzgerät angeordnet ist.

10. Landwirtschaftliche Verteilmaschine nach zumindest einem der vorstehenden Ansprüche, **dadurch gekennzeichnet, dass** mittels des auf dem Pflanzenschutzgerät angeordneten Ausgabemediums die während des Ausbringvorganges von dem Rechnersystem (1) errechneten und/oder ausgegebenen Daten unter Berücksichtigung der in dem Rechnersystemen (1) enthaltenen Toleranzgrenzen angezeigt wird, ob die Konzentration der Spritzbrühe von der optimalen Konzentration abweicht und/oder die Taumenge für die Pflanzenschutzmaßnahme zu groß ist, und dass bei Überschreiten der Toleranzgrenzen ein Hinweis auf dem Ausgabemedium (4) ausgegeben wird.

## Claims

1. Agricultural distributor, in particular field sprayer, wherein the material which is to be discharged, in particular crop protection fluid is fed in adjustable quantities and/or adjustable concentrations to discharge elements by means of at least one adjustable metering element, wherein the at least one metering element can be actuated and/or adjusted by an electronic computing system (1) which has a computer (2), wherein the distributor is assigned a sensor device for collecting data about the degree of moisture coverage of the plants, the leaf temperature and/or the surface temperature of the crop on an agricultural field area, wherein the sensor device transmits the data to the computer (2) wherein on the basis of the data transmitted about the degree of moisture coverage of the plants the on-board computer (2) determines, using a programme stored in a memory thereof, the discharge quantity and/or concentration of the crop protection fluid to be discharged and correspondingly adjusts the device for adjusting the discharge quantity and/or concentration of the crop protection fluid to be discharged, **characterized in that** the computer (2) co-operates with an electronic computing system (1) in order to determine the degree of moisture coverage of plants on the agricultural areas to be worked, by means of a programme stored in the memory of a computer (2), with a prediction tool taking into account past and/or current and/or predicted and/or expected weather data (3), wherein a prediction about the expected degree of dew coverage per point in time on the agricultural areas to be worked is produced by means of the programme on the basis of this weather data (3) and/or a selection from this weather data (3), and the result which is produced is included by the programme in the calculation of the data for adjusting the discharge quantity and/or the concentration of the crop protection fluid to be discharged and/or is suitably output on an output medium (4).

2. Agricultural distributor according to Claim 1, **characterized in that** the computer system (1) compares the data determined by the sensor device and the degree of moisture coverage calculated on the basis thereof with the degree of moisture coverage determined by the programme on the basis of weather data (3), and decides on the basis of a decision programme stored in the memory of the computer (2) which data will be used to determine and/or adjust the quantity of crop protection fluid to be discharged and/or the concentration of the crop protection fluid.

3. Agricultural distributor according to Claim 1, **characterized in that** the system accesses local, regional, supra-regional and/or global weather data (3) which is stored in at least one database (6) and takes into account said weather data (3) during the calculation of the respective degree of dew coverage.

4. Agricultural distributor according to at least one of the preceding claims, **characterized in that** local weather stations (7) which supply the local weather data (3) are present on the agricultural areas to be worked.

5. Agricultural distributor according to at least one of the preceding claims, **characterized in that** during the calculation of the respective degree of dew coverage the system additionally takes into account the leaf temperature of the plants and/or the surface temperature of the crop on the agricultural area to be worked.

6. Agricultural distributor according to at least one of the preceding claims, **characterized in that** the actual and/or expected quantity of dew at the provided handling times are/is output on the output medium (4) and/or stored in a suitable storage medium.

7. Agricultural distributor according to at least one of the preceding claims, **characterized in that** the concentration of the spraying mixture which is to be discharged is calculated by means of the programme on the basis of stored data relating to spraying agent to be discharged in conjunction with the calculated degree of dew coverage, and can be output on the output medium (4).

8. Agricultural distributor according to at least one of the preceding claims, **characterized in that** on the basis of the degree of dew coverage calculated by the system it is possible to output on the output medium an indication as to whether the planned crop protection measure can be carried out.

9. Agricultural distributor according to at least one of the preceding claims, **characterized in that** the output medium (4) is arranged on the crop protection device.

10. Agricultural distributor according to at least one of the preceding claims, **characterized in that** by means of the output medium which is arranged on the crop protection device, the data which is calculated and/or output by the computer system (1) during the discharge process is displayed taking into account the tolerance limit contained in the computer system (1), whether the concentration of the spraying mixture deviates from the optimum concentration and/or the quantity of dew is too large for the crop protection measure, and **in that** when the tolerance limits are exceeded an indication is output on the output medium (4).

## Revendications

1. Machine de distribution agricole, notamment un pulvérisateur agricole, dans laquelle le matériau à épandre, notamment un liquide phytosanitaire, est acheminé à des organes d'épandage au moyen d'au moins un organe de dosage réglable en quantités réglables et/ou en concentrations réglables, dans laquelle l'au moins un organe de dosage peut être commandé et/ou réglé par un système calculateur électronique (1) comprenant un ordinateur (2), dans laquelle un dispositif à capteur est associé à la machine de distribution pour collecter des données concernant le taux de revêtement d'humidité des plantes, la température des feuilles et/ou la température superficielle de la récolte de plantes sur une surface de terre agricole, dans laquelle le dispositif à capteur transmet les données à l'ordinateur (2), dans laquelle l'ordinateur de bord (2) détermine la quantité d'épandage et/ou la concentration du liquide phytosanitaire à épandre sur la base des données transmises concernant le taux de revêtement d'humidité des plantes au moyen d'un programme stocké dans sa mémoire et règle de manière correspondante le dispositif de réglage de la quantité d'épandage et/ou de la concentration du liquide phytosanitaire à épandre, **caractérisé en ce que** l'ordinateur (2) coopère avec un système de calcul électronique (1) destiné à déterminer le taux de revêtement d'humidité des plantes sur des surfaces agricoles à traiter au moyen d'un programme stocké dans la mémoire d'un ordinateur (2) à l'aide d'un outil de pronostic en tenant compte de données météorologiques (3) passées et/ou actuelles et/ou prévues et/ou à attendre, dans laquelle une prédiction concernant le taux de revêtement de rosée à attendre à chaque instant sur les surfaces agricoles à traiter est calculé au moyen du programme à partir de ces données météorologiques (3) et/ou d'une sélection de ces données et le résultat calculé est utilisé dans le calcul des données destinées à régler au moyen du programme la quantité d'épandage et/ou la concentration du liquide phytosanitaire à épandre et/ou est délivré en sortie de manière appropriée sur un support de sortie (4).

2. Machine de distribution agricole selon la revendication 1, **caractérisée en ce que** le système calculateur (1) compare les données obtenues par le dispositif à capteur et le taux de revêtement d'humidité calculé à partir de celles-ci au taux de revêtement d'humidité obtenu par le programme sur la base de données météorologiques (3) et, sur la base d'un programme de décision stocké dans la mémoire de l'ordinateur (2), choisit les données à partir desquelles la quantité du liquide phytosanitaire à épandre et/ou la concentration du liquide phytosanitaire est déterminée et/ou réglée.

3. Machine de distribution agricole selon la revendication 1, **caractérisée en ce que** le système accède à des données météorologiques (3) locales, régionales, suprarégionales et/ou globales stockées dans au moins une banque de données (6) et tient compte de celles-ci lors du calcul du taux de revêtement de rosée respectif.

4. Machine de distribution agricole selon au moins l'une des revendications précédentes, **caractérisée en ce que** des stations météorologiques locales (7) qui délivrent les données météorologiques locales (3) sont présentes sur les surfaces agricoles à traiter.

5. Machine de distribution agricole selon au moins l'une des revendications précédentes, **caractérisée en ce que** le système tient en outre compte de la température des feuilles des plantes et/ou de la température de surface de la récolte de plantes sur la surface agricole à traiter lors du calcul du taux de revêtement de rosée respectif.

6. Machine de distribution agricole selon au moins l'une des revendications précédentes, **caractérisée en ce que** le taux de rosée effectif et/ou à attendre lors des instants de traitement prévus est délivré en sortie sur le support de sortie (4) et/ou est stocké sur un support de mémoire approprié.

7. Machine de distribution agricole selon au moins l'une des revendications précédentes, **caractérisée en ce que** la concentration du liquide de pulvérisation à épandre est calculée au moyen du programme sur la base de données stockées concernant l'agent de pulvérisation à épandre en association avec le taux de revêtement de rosée calculé et peut être délivrée en sortie sur le support de sortie (4).

8. Machine de distribution agricole selon au moins l'une des revendications précédentes, **caractérisée en ce que**, sur la base du taux de revêtement de rosée calculé par le système, il peut être indiqué en sortie sur le support de sortie si la mesure phytosanitaire prévue peut être réalisée.

9. Machine de distribution agricole selon au moins l'une des revendications précédentes, **caractérisée en ce que** le support de sortie (4) est disposé sur l'appareil phytosanitaire.

10. Machine de distribution agricole selon au moins l'une des revendications précédentes, **caractérisée en ce que** les données calculées et/ou délivrées en sortie pendant le processus d'épandage par le système calculateur (1) sont affichées au moyen du support de sortie disposé sur l'appareil phytosanitaire en tenant compte des limites de tolérance contenues dans le système calculateur (1), si la concentration du liquide de pulvérisation s'écarte de la concentration optimale et/ou si le taux de rosée est trop élevé pour la mesure phytosanitaire, et **en ce que**, lorsque les limites de tolérance sont dépassées, une indication est délivrée sur le support de sortie (4).
